# EUROPÄISCHE PATENTANMELDUNG

(11) **EP 0 613 227 A1**
(43) Veröffentlichungstag der Anmeldung: **31.08.1994**
(21) Anmeldenummer: 94101378.1
(22) Anmeldetag: 31.01.1994
(51) Int. Cl.: H02K 3/50, H02K 3/52

(54) **Haltevorrichtung für eine Wicklung eines Stators eines Elektromotors**

(30) Priorität: 26.02.1993 DE 4305936
(71) Anmelder: Licentia Patent-Verwaltungs-GmbH, D-60596 Frankfurt (DE)
(72) Erfinder: Pöpelt, Bernhard, D-26127 Oldenburg (DE); Hadeler, Dieter, D-26123 Oldenburg (DE)
(74) Vertreter: Vogl, Leo, Dipl.-Ing.

(57) **Zusammenfassung**

Die Erfindung betrifft eine Haltevorrichtung für eine Wicklung (1) eines Stators (3) eines Elektromotors mit einer den Wickelkopf (5) zusammenhaltenden Haltelasche (7), wobei die Lage der Haltelasche (7) durch ein Halteglied (11) gehalten wird. Das Zusammenbinden des Wickelkopfes (5) wird erfindungsgemäß dadurch vereinfacht, daß das Halteglied (11) einen die Haltelasche (7) bildenden flexiblen Ansatz (9) aufweist, dessen freies Ende (63) hintereinander angeordnete Rastmittel aufweist, welche über einen Einführungsschlitz (69) bildenden Einfädelungsschrägflächen (65, 67) hinter Rastnasen von zwei gegeneinander federnden Gegenrastmitteln an dem Halteglied (11) automatisch formschlüssig verrastbar sind. Hierdurch wird das Zusammenbinden des Wickelkopfes (5) durch einen Automaten ermöglicht.

## Beschreibung

Die Erfindung betrifft eine Haltevorrichtung für eine Wicklung eines Stators eines Elektromotors der im Oberbegriff des Patentanspruchs 1 angegebenen Art.

Es gibt verschiedene Verfahren, um die Wickelköpfe in elektrischen Maschinen zu festigen und auf diese Weise vor Beschädigungen zu schützen. Eine der gebräuchlichsten Verfahren ist das Bandagieren, wobei die Wickelköpfe durch Umschlingen mit Baumwollband, Glasseide, Schnur oder dergleichen von Hand oder maschinell fest zusammengeschnürt werden. Bei der maschinellen Herstellung von Motoren wird dabei in der Regel so vorgegangen, daß die z. B. in einem Stator eingezogenen Wicklungen im Bereich des stirnseitig über das Statorblechpaket vorstehenden Wickelköpfe vorgeformt werden, dann das Bandagieren folgt und schließlich ein zweiter Preß- bzw. Formvorgang die bandagierten Wickelköpfe noch genau ausrichtet. Ein Nachteil besteht darin, daß die Form- und Bandagiervorgänge nacheinander stattfinden. Dabei federn die vorgeformten Wickelköpfe infolge Eigenelastizität teilweise wieder auf, bevor sie bandagiert werden, lassen sich dann nicht festgepackt umschnüren und lockern sich durch das Nachformen in der Bandage weiter, so daß während des späteren Betriebes des Motors Eigenbewegungen und Schwingungen einzelner Drähte möglich sind, die dann zum Bruch führen können.

Eine Verbesserung der Halterung der Kabelbinder wurde dadurch erzielt, daß die Wicklungsteile des Wickelkopfes durch einen laschenartigen, verrastbaren Kabelbinder festgelegt wurden. Obwohl dieser Kabelbinder beim Festlegen der Wicklungsteile selbsttätig verrastet, kann dieser später noch seitlich verrutschen, wodurch einzelne Drähte lose werden und in Schwingungen geraten können. Durch eine Tränkung des Wickelkopfes mit dem Kabelbinder wird dieses Verrutschen zwar verhindert, aber es ist ein zusätzlicher Arbeitsgang erforderlich. Hierzu wird die Herstellung der elektrischen Maschine zusätzlich verteuert.

Weiterhin werden durch die DE-OS 41 17 905 die Wicklungsdrähte der über die Stirnfläche des Statorblechpaketes hinausragenden Wickelköpfe durch laschenartige Kabelbinder zusammengehalten. Diese Kabelbinder weisen zwischen ihren Rastverzahnungen und Verschlußelementen Sperrstege auf, welche in die Fenster zwischen den Spulen und den Stirnflächen der Statorblechpakete einschieb- und verkeilbar sind. Hierdurch wird zwar ein Verrutschen der verrasteten Kabelbinder sicher verhindert, aber die Befestigung der Kabelbinder kann nicht von einem Automaten durchgeführt werden.

Der Erfindung liegt die Aufgabe zugrunde, eine Haltevorrichtung für die Wickelköpfe elektrischer Maschinen zu schaffen, die die oben genannten Nachteile vermeidet und durch einen Automaten leicht anzubringen ist. Diese Aufgabe wird durch die im Patentanspruch 1 gekennzeichnete Erfindung gelöst.

Die erfindungsgemäße Halterung ermöglicht eine einfache, billige und sichere Festlegung der Windungen von Wickelköpfen in elektrischen Maschinen, die auch durch einen Automaten vorgenommen werden kann. Ein Verrutschen des verrasteten Kabelbinders wird ebenfalls sicher vermieden.

Weitere vorteilhafte Ausgestaltungen des Erfindungsgegenstandes sind den weiteren Unteransprüchen zu entnehmen. Die Erfindung wird anhand eines Ausführungsbeispiels im folgenden näher beschrieben. Es zeigen:
- Figur 1: eine schaubildliche Darstellung eines Statorabschnittes eines Elektromotors mit der Halterung nach der Erfindung und
- Figur 2: eine Einzelheit aus Figur 1.

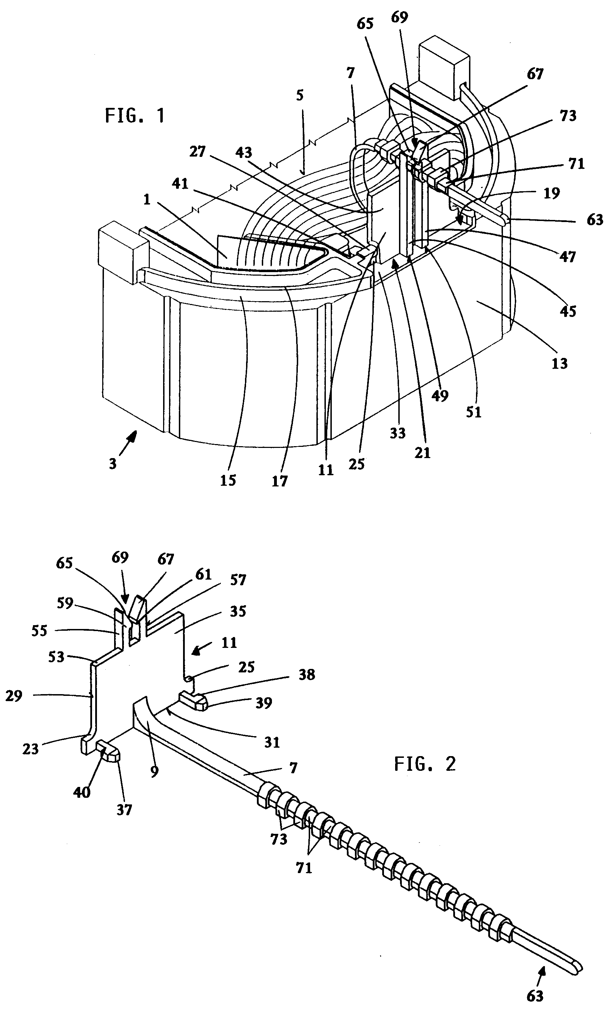

Die Figur 1 zeigt eine Haltevorrichtung für eine Wicklung 1 eines Stators 3 eines Elektromotors mit einer um den Wickelkopf 5 herumgelegten Haltelasche 7, durch welche die einzelnen Windungen der Wicklung 1 zusammengehalten werden und der Wickelkopf 5 geformt wird. Die Haltelasche 7 ist als flexibler Ansatz 9 an einem aus Kunststoff bestehenden Halteglied 11 fest angeordnet, welches wiederum auf der stirnseitig auf dem Statorblechpaket 13 angeordneten, aus Isolierstoff bestehenden Endscheibe 15 fest gelagert ist. Das Halteglied 11 ist gemäß Figur 1 über federnde Rastmittel mit der Endscheibe 15 fest verbunden, wobei die Endscheibe 15 an ihrer freien Stirnfläche 17 eine Führungsnut 19 mit einer Führungsfläche 33 zum Einschieben des Haltegliedes 11 mit einer Gegenführungsfläche 21 in die Raststellung aufweist. Hierbei ist das Halteglied 11 mit seitlich zur Schieberichtung angeordneten Anschlagnasen 23, 25 unter Anschlagkanten 27 an der Endscheibe 15 schiebbar. Hierdurch wird ein Abheben des Haltegliedes 11 von der Führungsfläche 33 in der Führungsnut 19 in der Raststellung des Haltegliedes 11 sicher verhindert.

Das Halteglied 11 weist übrigens eine rechteckförmige Stützplatte 29 auf, deren untere Längsseitenfläche 31 als Teil der Gegenführungsfläche 21 für die Führungsnut 19 dient. Die Stützplatte 29 weist übrigens die seitlich vorstehenden Anschlagnasen 23, 25 auf. Das Verrasten des Haltegliedes 11 in der Raststellung erfolgt über federnde Rasthaken 37, 39, welche an der vorderen Seitenfläche 35 der Stützplatte 29 angeordnet und auf der Führungsfläche 33 in der Führungsnut 19 gleitbar gelagert sind. Diese Rasthaken 37, 39 sind mit Rastnasen 38, 40 hinter festen Anschlagkanten 41 an der Endscheibe 15 verrastbar.

Weiterhin ist die Stützplatte 29 an der in Schieberichtung hinten liegenden Rückseitenfläche 43 mit zwei vorstehenden Versteifungsrippen 45, 47 versehen, welche mit ihren ersten Enden 49, 51 auf der Führungsfläche 33 in der Führungsnut 19 aufliegen und mit ihren über die oberen Längsseitenflächen 53 der Stützplatte 29 hinausragenden, zweiten Enden 55, 57 die Gegenrastmittel zum Verrasten der Haltelasche 7 aufweisen. Die zweiten Enden 55, 57 der beiden parallel zueinander angeordneten Versteifungsrippen 45, 47 sind federnd ausgebildet und sind mit vorstehenden Rastnasen 59, 61 zum Einrasten der Rastmittel an dem freien Ende 63 der Haltelasche 7 versehen. Die zweiten Enden 55, 57 der Versteifungsrippen 45, 47 weisen nach innen verlaufende Einführungsschrägflächen 65, 67 als Einführungsschlitz 69 für die Rastmittel an der Haltelasche 7 auf. Die Rastmittel an der Haltelasche 7 bestehen aus mehrkantigen Rastzapfen 71, 73 mit zwei unterschiedlichen Durchmessern, die abwechselnd hintereinander angeordnet sind. Der Rastzapfen 71 mit dem kleinen Durchmesser ist hinter den Rastnasen 59, 61 verrastbar, während mindestens einer der beiderseits des mit dem kleinen Durchmesser versehenen eingerasteten Rastzapfens 71 unmittelbar angeordneten Rastzapfens 73 mit den großen Durchmessern seitlich an den freien Enden 55, 57 der Versteifungsrippen 45, 47 mit den Rastnasen 59, 61 kraftschlüssig anliegen. Hierdurch wird eine sichere Verrastung der Haltelasche 7 mit dem Halteglied 11 gewährleistet.

Das Zusammenbinden der Wickelköpfe 5 erfolgt nach dem Einschießen der Wicklungen 1 in den Stator 3 dadurch, daß das Halteglied mittels eines Automaten in die Führungsnut 19 soweit eingeschoben wird, bis das Halteglied 11 mit den Rastnasen 48, 50 hinter den Rastkanten 41 verrastet ist. Danach wird das freie Ende 63 der Haltelasche 7 mit dem Rastzapfen 71 über die Einführungsschrägflächen 65, 67 in die Raststellung gedrückt. Hierbei verrastet der Rastzapfen 71 hinter den Rastnasen 59, 61, wobei mindestens einer der Rastzapfen 73 an den Seitenflächen der zweiten Enden 55, 57 der Versteifungsrippen 45, 47 kraftschlüssig anliegt. Dieses Verrasten der Haltelasche 7 kann sowohl durch einen Automaten als auch erforderlich von Hand erfolgen.

Mit dem Einsetzen des Haltegliedes 11 in die Führungsnut 19 wird das freie Ende 63 der Lasche 7 durch die gegenüber der Stirnfläche 17 des Stators 3 vorstehende Schlaufe des Wickelkopfes 5 geschoben. Dieses wird dadurch ermöglicht, daß die Haltelasche 7 aus einem flexiblen Ansatz 9 an dem Halteglied 11 besteht, der parallel zu der Stirnfläche 17 der Endscheibe 15 und zum Statorinneren ausgerichtet ist, siehe gestrichelte Darstellung in Figur 1. In dieser ausgerichteten Stellung kann das freie Ende 63 der Haltelasche 7 auch sehr sicher von einem Automaten erfaßt und dann um den Wickelkopf 5 gelegt werden.

Im Rahmen der Erfindung kann das Zusammenbinden des Wickelkopfes 5 auch dann durch einen Automaten erfolgen, wenn das Halteglied 11 nicht an der Endscheibe 15 befestigt ist.

## Patentansprüche

1. Haltevorrichtung für eine Wicklung eines Stators eines Elektromotors mit einer um den Wickelkopf herumgelegten Haltelasche, durch welche die einzelnen Windungen der Wicklung zusammengehalten werden und der Wickelkopf geformtwird, und mit einem Halteglied, das die den Wickelkopf mittig umschließende Haltelasche in Lage hält, **dadurch gekennzeichnet,** daß das Halteglied (11) einen die Haltelasche (7) bildenden flexiblen Ansatz (9) aufweist, dessen freies Ende (63) hintereinander angeordnete Rastmittel aufweist, welche über einen Einführungsschlitz (69) bildenden Einfädelungsschrägflächen (65, 67) hinter Rastnasen (59, 61) von zwei gegeneinander federnden Gegenrastmitteln an dem Halteglied (11) automatisch formschlüssig verrastbar sind.

2. Haltevorrichtung nach Anspruch 1, **dadurch gekennzeichnet,** daß das Halteglied (11) auf der stirnseitig auf dem Statorblechpaket (13) angeordneten, aus Isolierstoff bestehenden Endscheibe (15) fest gelagert ist.

3. Haltevorrichtung nach Anspruch 2, **dadurch gekennzeichnet,** daß das aus Kunststoff bestehende Halteglied (11) über federnde Rastmittel mit der Endscheibe (15) fest verbunden ist.

4. Haltevorrichtung nach Anspruch 3, **dadurch gekennzeichnet,** daß die Endscheibe (15) an ihrer freien Stirnfläche (17) eine Führungsnut (19) zum Einschieben des Halteg**lie**des (11) mit einer Führungsfläche (21) in die Raststellung aufweist, wobei das Halteglied (11) mit seitlich zur Schieberichtung angeordneten Anschlagnasen (23, 25) unter Anschlagkanten (27) an der Endscheibe (15) schiebbar ist.

5. Haltevorrichtung nach Anspruch 4, **dadurch gekennzeichnet,** daß das Halteglied (11) eine rechteckförmige Stützplatte (29) aufweist, deren untere Längsseitenfläche (31) als Führungsfläche für die Führungsnut (19) dient, daß die Stützplatte (29) die seitlich vorstehenden Anschlagnasen (23, 25) aufweist und daß die in Schieberichtung vordere Seitenfläche (35) an beiden Seiten je einen seitlich federnden Rasthaken (37, 38) aufweist, welche auf der Führungsfläche (33) der Führungsnut (19) gleitbar gelagert und mit Rastnasen (48, 50) hinter festen Anschlagkanten (41) an der Endscheibe (15) verrastbar sind.

6. Haltevorrichtung nach Anspruch 5, **dadurch gekennzeichnet,** daß die Stützplatte (29) an der in Schieberichtung hinten liegenden Rückseitenfläche (43) zwei vorstehende Versteifungsrippen (45, 47) aufweist, welche mit ihren ersten Enden (49, 51) auf der Führungsfläche (33) in der Führungsnut (19) aufliegen und mit ihren über die obere Längsseitenfläche (53) der Stützplatte (29) hinausragenden zweiten Enden (55, 57) die Gegenrastmittel zum Verrasten der Haltelasche (7) aufweisen.

7. Haltevorrichtung nach Anspruch 6, **dadurch gekennzeichnet,** daß die zweiten Enden (55, 57) der beiden parallel zueinander angeordneten Versteifungsrippen (45, 47) federnd ausgebildet sind und nach innen vorstehende Rastnasen (59, 61) zum Einrasten der Rastmittel an dem freien Ende (63) der Haltelasche (7) aufweisen.

8. Haltevorrichtung nach Anspruch 7, **dadurch gekennzeichnet,** daß die zweiten Enden (55, 57) der Versteifungsrippen (45, 47) nach innen verlaufende Keilflächen (65, 67) als Einführungsschlitz (69) für die Rastmittel an der Haltelasche (7) aufweisen.

9. Haltevorrichtung nach einem der vorhergehenden Ansprüche, **dadurch gekennzeichnet,** daß auf dem freien Ende (63) der Haltelasche (7) mehrkantige Rastzapfen (71, 73) mit zwei unterschiedlichen Durchmessern abwechselnd hintereinander angeordnet sind, von denen der Rastzapfen (71) mit dem kleinen Durchmesser hinter den Rastnasen (59, 61) verrastbar sind, und daß mindestens einer der beiderseits des mit dem kleinen Durchmesser versehenen, eingerasteten Rastzapfens (71) unmittelbar angeordneten Rastzapfen (73) mit dem großen Durchmesser seitlich an den freien Enden (55, 57) der Versteifungsrippen (45, 47) mit den Rastnasen (59, 61) kraftschlüssig anliegen.
